# EUROPEAN PATENT APPLICATION

(11) **EP 1 959 667 A1**
(43) Date of publication of application: **20.08.2008**
(21) Application number: 08151474.7
(22) Date of filing: 15.02.2008
(51) Int. Cl.: H04N 1/32

(54) **Image processing apparatus, image processing method, and computer program product**

(30) Priority: 16.02.2007 JP 2007035955
(71) Applicant: Ricoh Company, Ltd., Tokyo 143-8555 (JP)
(72) Inventor: Hamada, Yuuta, c/o Ricoh Company, Ltd., Tokyo 143-8555 (JP); Kozuka, Naoki, c/o Ricoh Company, Ltd., Tokyo 143-8555 (JP); Honda, Tadashi, c/o Ricoh Company, Ltd., Tokyo 143-8555 (JP); Horikawa, Hirofumi, c/o Ricoh Company, Ltd., Tokyo 143-8555 (JP)
(74) Representative: Schwabe - Sandmair - Marx

(57) **Abstract**

A print-information acquiring unit acquires print object information as an image and predetermined information to be encoded. A code-image creating unit encodes the predetermined information according to a predetermined encode rule to create a plurality of types of code images. A layer-image creating unit creates a plurality of types of layer images including the code images for each of the types. A combined-image creating unit superimposes the types of layer images according to a predetermined superimposition rule to create a combined image. A printing unit prints the combined image created by the combined-image creating unit on a recording medium.

## Description

### CROSS-REFERENCE TO RELATED APPLICATIONS

The present application claims priority to and incorporates by reference the entire contents of Japanese priority document 2007-035955 filed in Japan on February 16, 2007.

### BACKGROUND OF THE INVENTION

### 1. Field of the Invention

The present invention relates to a technology for acquiring an electronic document through a network and printing an image using the acquired electronic document.

### 2. Description of the Related Art

Conventionally, there is a technology for printing a computer-readable code image on paper together with a document image (see, for example, Japanese Patent Application Laid-open No. 2006-60805). There is also a technique for printing a plurality of types of such code images one on top of another on one piece of paper together with a document image (see, for example, Japanese Patent Application Laid-open No. 2006-279325). The respective code images printed on the paper in this way are read, for example, when the paper is copied, encoded, and used for processing as appropriate.

However, when the types of code images are printed one on top of another on one piece of paper, when the code images are read, the respective code images cannot be discriminated from one another because the images overlap. Therefore, it is likely that the respective code images cannot be correctly read.

### SUMMARY OF THE INVENTION

It is an object of the present invention to at least partially solve the problems in the conventional technology.

According to an aspect of the present invention, there is provided an image processing apparatus including a print-information acquiring unit that acquires print object information to be printed as an image and predetermined information to be encoded; a code-image creating unit that encodes the predetermined information acquired by the print-information acquiring unit according to a predetermined encode rule to create a plurality of types of code images; a layer-image creating unit that creates a plurality of types of layer images including the code images created by the code-image creating unit for each of the types; a combined-image creating unit that superimposes the types of layer images created by the layer-image creating unit according to a predetermined superimposition rule to create a combined image; and a printing unit that prints the combined image created by the combined-image creating unit on a recording medium.

Furthermore, according to another aspect of the present invention, there is provided an image processing method that includes print-information acquiring including acquiring print object information to be printed as an image and predetermined information to be encoded; code-image creating including encoding the predetermined information acquired at the print-information acquiring according to a predetermined encode rule to create a plurality of types of code images; layer-image creating including creating a plurality of types of layer images including the code images created at the code-image creating for each of the types; combined-image creating including superimposing the types of layer images created at the layer-image creating according to a predetermined superimposition rule to create a combined image; and printing the combined image created at the combined-image creating on a recording medium.

Moreover, according to still another aspect of the present invention, there is provided a computer program product including a computer-usable medium having computer-readable program codes embodied in the medium that when executed cause a computer to execute print-information acquiring including acquiring print object information to be printed as an image and predetermined information to be encoded; code-image creating including encoding the predetermined information acquired at the print-information acquiring according to a predetermined encode rule to create a plurality of types of code images; layer-image creating including creating a plurality of types of layer images including the code images created at the code-image creating for each of the types; combined-image creating including superimposing the types of layer images created at the layer-image creating according to a predetermined superimposition rule to create a combined image; and printing the combined image created at the combined-image creating on a recording medium.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of the structure of an entire image processing system according to an embodiment of the present invention;
Fig. 2 is a block diagram of a hardware configuration of a multifunction peripheral MFP1 according to the embodiment;
Fig. 3 is a block diagram of the functional structure of the multifunction peripheral MFP1 according to the embodiment;
Fig. 4 is a diagram of an example of a code image output by a symbol encoder 200 according to the embodiment;
Fig. 5 is a diagram of an example of a code image output by a content processing encoder 201 according to the embodiment;
Fig. 6 is a diagram of an example of a code image output by a woven pattern encoder 202 according to the embodiment;
Fig. 7 is a diagram of an example of the data structure of an embedded data list according to the embodiment;
Fig. 8 is a diagram of an example of the data structure of a layer allocation information table 300 in a data layer M3 according to the embodiment;
Fig. 9 is a diagram of the data structure of a content processing area information table 302 according to the embodiment;
Fig. 10 is a diagram of the data structure of a woven pattern area information table 303 according to the embodiment;
Fig. 11 is a diagram of the data structure of a symbol superimposing position information table 301 according to the embodiment;
Fig. 12 is a diagram of the data structure of a layer image information list according to the embodiment;
Fig. 13 is a flowchart of a procedure of print processing performed by receiving a print command from a printer driver of a personal computer PC1 according to the embodiment;
Fig. 14 is a diagram of an example of a screen displayed on a display unit of the personal computer PC1 as a user interface for designating encode object data according to the embodiment;
Fig. 15 is a diagram of an example of a screen displayed on the display unit when a button B1 or B2 displayed in the example of the screen shown in Fig. 14 is clicked by a user according to the embodiment;
Fig. 16 is a diagram of an example of a rendering image created by a print application 100 according to the embodiment;
Fig. 17 is a flowchart of a detailed procedure of processing at Steps S3 to S6 according to the embodiment;
Fig. 18 is a diagram of an example of a symbol layer created by the print application 100 according to the embodiment;
Fig. 19 is a flowchart of a detailed procedure of processing at Steps S7 to S10 according to the embodiment;
Fig. 20 is a diagram of an example of a rendering image divided into areas according to processing area information according to the embodiment;
Fig. 21 is a diagram of an example of code images created by the content processing encoder 201 according to the embodiment;
Fig. 22 is a flowchart of a detailed procedure of processing at Steps S11 to S14 according to the embodiment;
Fig. 23 is a diagram of an example of a size of a processing area according to the embodiment;
Fig. 24 is a diagram of an example of a code image created by the woven pattern encoder 202 according to the embodiment;
Fig. 25 is a flowchart of a detailed procedure of processing at Step S16 according to the embodiment;
Fig. 26 is a diagram of an example of an image printed on paper according to the embodiment;
Fig. 27 is a block diagram of the functional structure of a multifunction peripheral MFP including an encoder wrapper according to a modification of the present invention;
Fig. 28 is a flowchart of a procedure of operations according to the modification;
Fig. 29 is a diagram of an example of a content processing layer created by the print application 100 according to an embodiment of the present invention; and
Fig. 30 is a diagram of an example of a woven pattern layer created by the print application 100 according to the embodiment.

### DETAILED DESCRIPTION OF THE PREFERRED EMBODIMENTS

Exemplary embodiments of the present invention are explained in detail below with reference to the accompanying drawings.

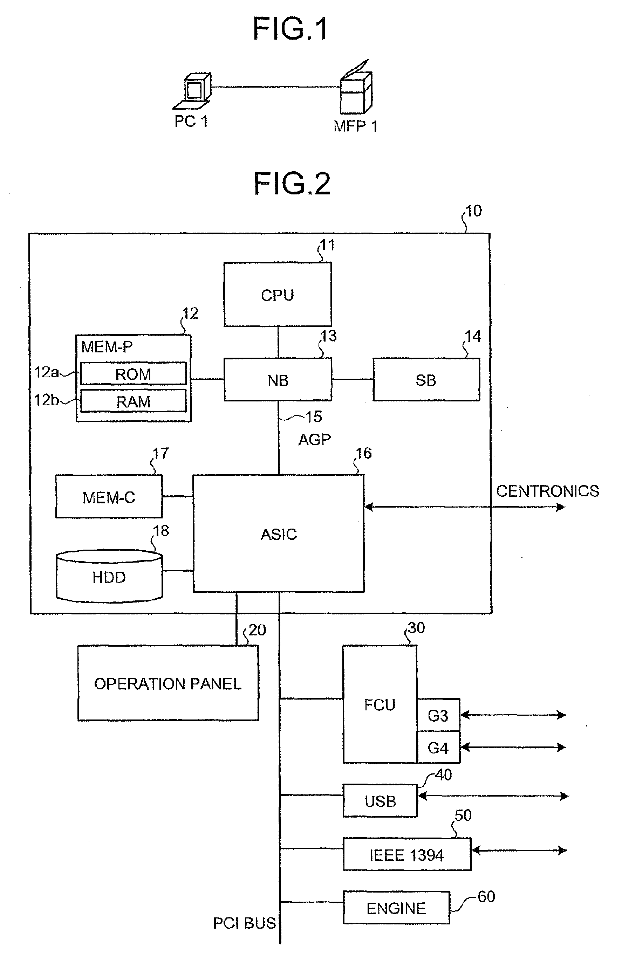

Fig. 1 is a block diagram of the structure of an entire image processing system according to an embodiment of the present invention. As shown in the figure, in the image processing system, a multifunction peripheral MFP1 and a personal computer PC1 are connected through connecting means (not shown) such as a LAN and a USB.

The personal computer PC1 has the structure of a general computer including a central processing unit (CPU) that controls the entire personal computer PC1, a read only memory (ROM) that stores various control programs, various data, and the like, a random access memory (RAM), a hard disk (HD) that stores various application programs and various data, a communication unit that controls data communication with an external apparatus, and a bus that connects the CPU, the ROM, the RAM, the HDD, and the communication unit (all of these components are not shown in the figure). A display unit such as a monitor and an operation unit such as a keyboard (both the units are not shown in the figure) are connected to the personal computer PC1 through wire or wireless connecting means. A printer driver is stored in the ROM of the personal computer PC1. When the printer driver is started by the CPU, the personal computer PC1 transmits a print command to the multifunction peripheral MFP1 in the same in-house system SYM through the communication unit.

Fig. 2 is a block diagram of the hardware structure of the multifunction peripheral MFP1. As shown in Fig. 2, in the multifunction peripheral MFP, a controller 10 and an engine unit (engine) 60 are connected by a peripheral component interconnect (PCI) bus. The controller 10 is a controller that controls the entire multifunction peripheral MFP1, rendering, communication, and input from a not-shown operation unit. The engine unit 60 is a printer engine or the like connectable to the PCI bus. The engine unit 60 includes a scanning unit such as a scanner and also includes a printing unit such as a black and white plotter, a one-drum color plotter, or a four-drum color plotter (both the scanner unit and the printing unit are not shown in the figure). An engine unit 40 includes, in addition to a so-called engine section of the plotters and the like, an image processing section for error diffusion, gamma conversion, and the like. Besides, the multifunction peripheral MFP1 includes an image reading unit such as a scanner that scans paper to read an image. The multifunction peripheral MFP1 also includes an operation panel 20 in which an operation device to which operation from the user is inputted and a display device that displays information are integrally formed. The operation panel 20 is connected to an application specific integrated circuit (ASIC) 16. A CPU 11 included in the controller 10 has a timing function and measures a present date and time. A detailed electrical structure of such a multifunction peripheral MFP1 is disclosed in, for example, Japanese Patent Application Laid-open No. 2006-177990. Therefore, explanation of the detailed electrical structure is omitted. Functions realized by the CPU 11 executing various programs stored in a read only memory (ROM) 12a, i.e., the functional structure of the multifunction peripheral MFP is explained below.

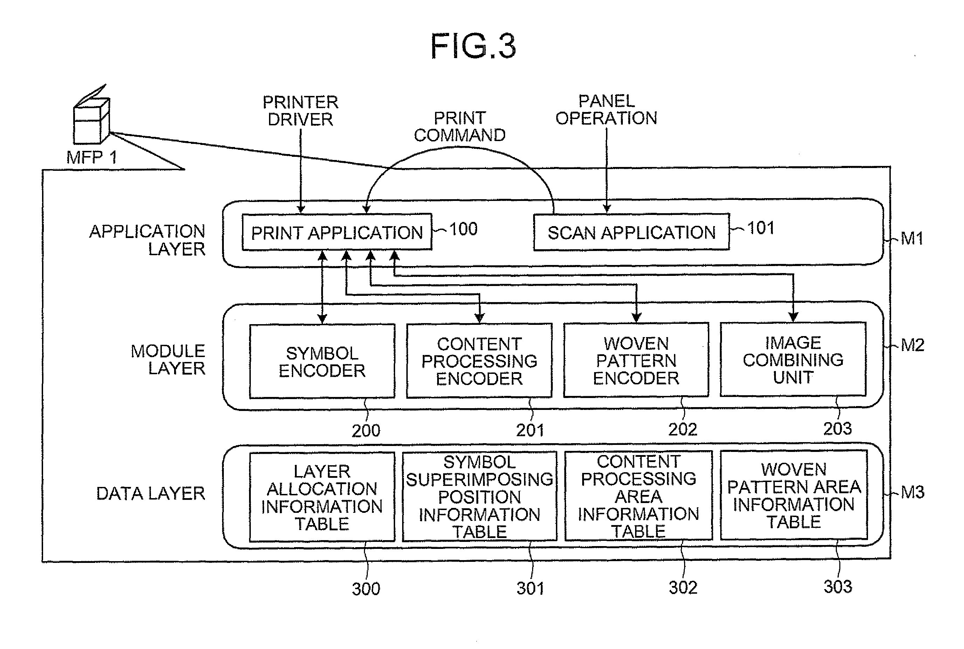

Fig. 3 is a block diagram of the functional structure of the multifunction peripheral MFP1. Functions of the multifunction peripheral MFP1 are roughly divided into an application layer M1, a module layer M2, and a data layer M3. The application layer M1 includes the print application 100 and a scan application 101. The module layer M2 includes the symbol encoder 200, the content processing encoder 201, the woven pattern encoder 202, and an image combining unit 203. The data layer M3 includes the layer allocation information table 300, the symbol superimposing position information table 301, the content processing area information table 302, and the woven pattern area information table 303. These tables 300 to 303 are stored in a hard disk (HD) or the like.

The print application 100 prints print object images in a printing unit using the encoders 202 to 202 and the image combining unit 203. The print application 100 prints copy object images in the printing unit according to a print command from the scan application 101. The scan application 101 passes a print command for an image, which is read by scanning copy object paper with a scanning unit, to the print application 100. The symbol encoder 200, the content processing encoder 201, and the woven pattern encoder 202 encode pieces of encode object information into at least one carrier (information carrier) among symbol, content processing, and woven pattern carriers, respectively, and create code images. The encoders 200 to 202 can be manufactured by using various publicly-known technologies. The image combining unit 203 combines the code images created by the encoders 200 to 202.

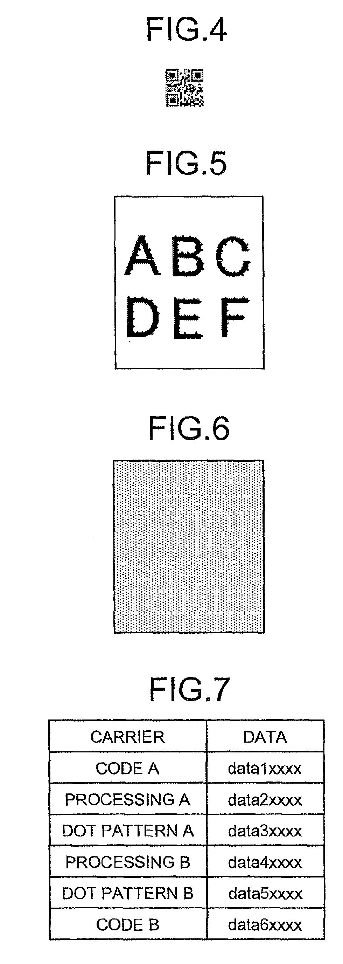

The symbol encoder 200 outputs, using encode object data such as a character sting and a byte array and creation parameters such as a size of an image, a code image representing a characteristic geometric pattern (symbol). Fig. 4 is a diagram showing an example of a code image output by the symbol encoder 200. Specific examples of the code image output by the symbol encoder 200 include a two-dimensional code shown in Fig. 4 and a one-dimensional barcode. Examples of the one-dimensional barcode include Code39, Code128, EAN-8, EAN-13, NW-7, and Code128. Examples of the two-dimensional code include QR, DataMatrix, and PDF417.

The content processing encoder 201 applies, using print object image data, encode object data such as a character string and a byte array, and creation parameters such as embedding intensity, processing less conscious for human eyes to a print object image and outputs a processed image as a code image. Fig. 5 is a diagram of an example of the code image output by the content processing encoder 201. Specific examples of content processing performed by the content processing encoder 201 include processing for embedding voids (like cutouts) or spots in edge portions of an image and processing for slightly shifting character intervals.

The woven pattern encoder 202 outputs, using encode object data such as a character string and a byte array and creation parameters such as the density of a woven pattern, a woven pattern image representing a fine dot pattern as a code image. Fig. 6 is a diagram of an example of the code image output by the woven pattern encoder 202. Specific examples of the dot pattern include an anoto pattern.

Images created by a print application described later by using the code images created by the encoders 200 to 202 are regarded as layers, which are referred to as a woven pattern layer, a content processing layer, and a symbol layer, respectively. The image combining unit 203 superimposes the respective layers in order of the above description to thereby combine the respective code images and create a combined image. In the symbol layer, a white background portion for representing a symbol itself and a background portion of the symbol layer are distinguished. Alternatively, portions on which a code image representing the symbol overlaps are printed white in the woven pattern layer and the content processing layer and, then, the symbol layer is superimposed on the woven pattern layer and the content processing layer. In this way, it is possible to create a combined image from which a plurality of types of code images can be accurately read and accurately decoded.

The print application 100 has two functions corresponding to a difference in a print command source. Specifically, the print application 100 has a driver print function and a scan print function. The driver print function is a function of receiving a print command from the printer driver of the personal computer PC1 and printing an image according to the print command. The scan print function is a function of receiving a print command from the scan application 101 that scans copy object paper in the multifunction peripheral MFP1 and printing an image according to the print command.

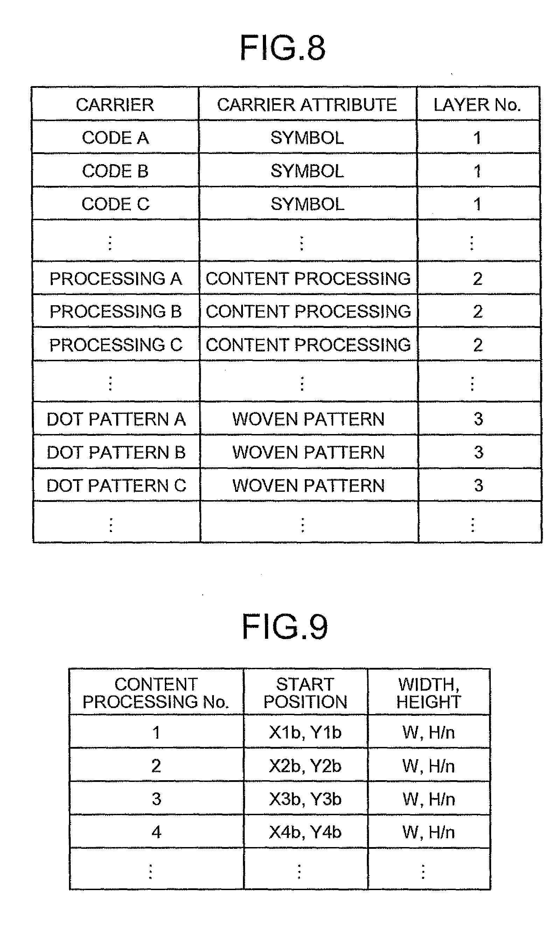

In both the functions, the print application 100 acquires information concerning a print object image and an embedded data list concerning encode object data. The embedded data list is information in a form of a list representing a correspondence relation between the encode object data and the carriers described above indicating types of encode. Fig. 7 is a diagram of an example of the data structure of the embedded data list. In the figure, as carriers, codes A and B classified into the symbol carrier, content processing A and content processing B classified into the content processing carrier, and dot patterns A and B classified into the woven pattern carrier are associated with encode object data. Fig. 8 is a diagram of an example of the data structure of the layer allocation information table 300 in the data layer M3. The print application 100 performs rendering of a print object image and classifies the encode object data in the embedded data list into types of symbol data, content processing data, and woven pattern data, respectively, referring to the layer allocation information table 300. The print application 100 requests the encoders 200 to 202 corresponding to the types to encode the data of the classified types, respectively.

In requesting the content processing encoder 201 to encode the data, the print application 100 determines a size of an image created as a code image referring to the content processing area information table 302 in the data layer M3 and requests the content processing encoder 201 to encode the data to obtain a code image of the size. The print application 100 determines an arrangement position of the code image created by the content processing encoder 201 referring to the content processing area information table 302 and creates a content processing layer in which the code image is arranged. Fig. 9 is a diagram of the data structure of the content processing area information table 302. In the content processing area information table 302, processing area information including a "start position" and "width and length" is stored for each content processing number. Details of the processing described above performed by using the processing area information are described later.

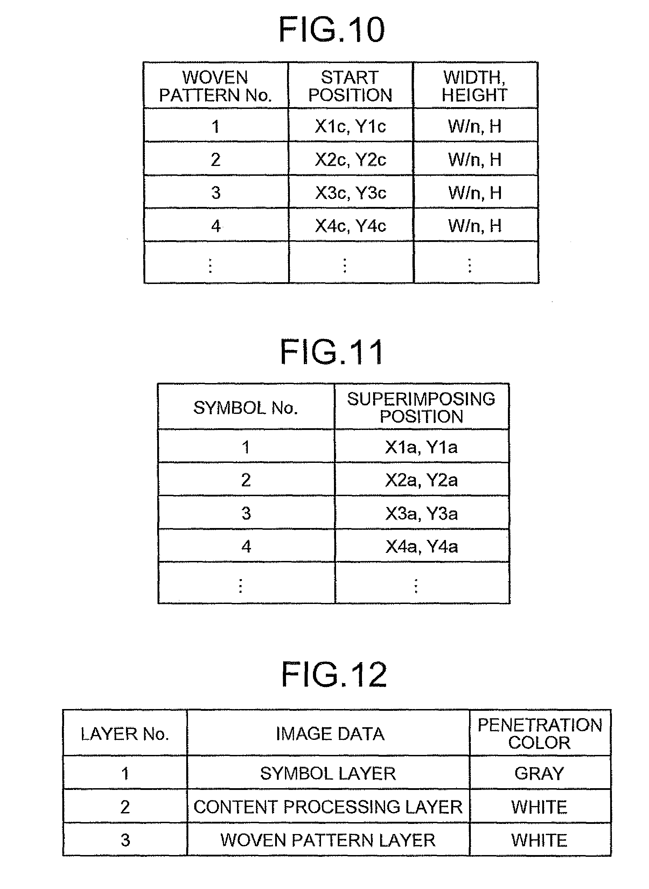

In requesting the woven pattern encoder 202 to encode the data, the print application 100 determines a size of an image created as a code image referring to the woven pattern area information table 303 in the data layer M3 and requests the woven pattern encoder 202 to encode the data to obtain a code image of the size. The print application 100 determines an arrangement position of the code image created by the woven pattern encoder 202 referring to the woven pattern area information table 303 and creates a woven pattern layer in which the code image is arranged. Fig. 10 is a diagram of the data structure of the woven pattern area information table 303. In the woven pattern area information table 303, processing area information including a "start position" and "width and height" is stored for each woven pattern number. Details of the processing described above performed by using the processing area information are described later.

When a code image is created by the symbol encoder 200, the print application 100 determines an arrangement position of the code image referring to the symbol superimposing position information table 301 and creates a symbol layer in which the code image is arranged. Fig. 11 is a diagram of the data structure of the symbol superimposing position information table 301. In the symbol superimposing position information table 301, positional information including a "superimposing position" of the code image is stored for each symbol number. Details of the processing described above performed by using the positional information are described later.

The print application 100 creates a layer image information list indicating an order of superimposition of the created respective layers. Fig. 12 is a diagram of the data structure of the layer image information list. The print application 100 passes the layer image information list shown in the figure to the image combining unit 203 and requests the image combining unit 203 to combine the layers. The print application 100 prints an image combined according to the request on paper according to print conditions indicated by the user.

Copy object paper is set on the multifunction peripheral MFP and a print instruction, print conditions, and information concerning encode object data are input by the user on the operation panel 20 of the multifunction peripheral MFP. Then, the scan application 101 acquires an image (a scan image), which is read by scanning the paper with the scanning unit, and passes the scan image, the print conditions, and the embedded data list to the print application 100 together with a print command.

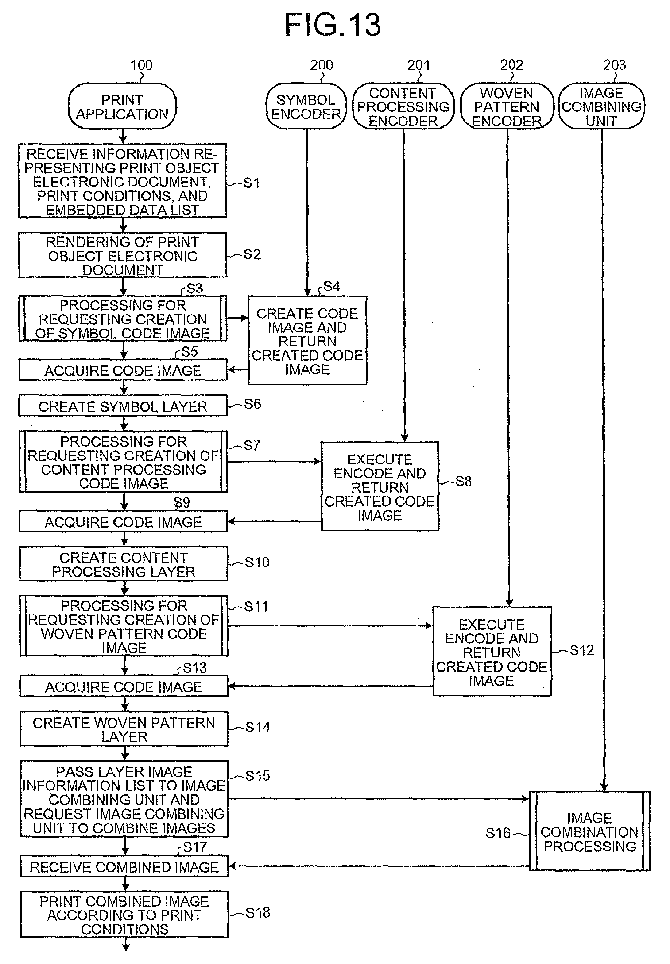

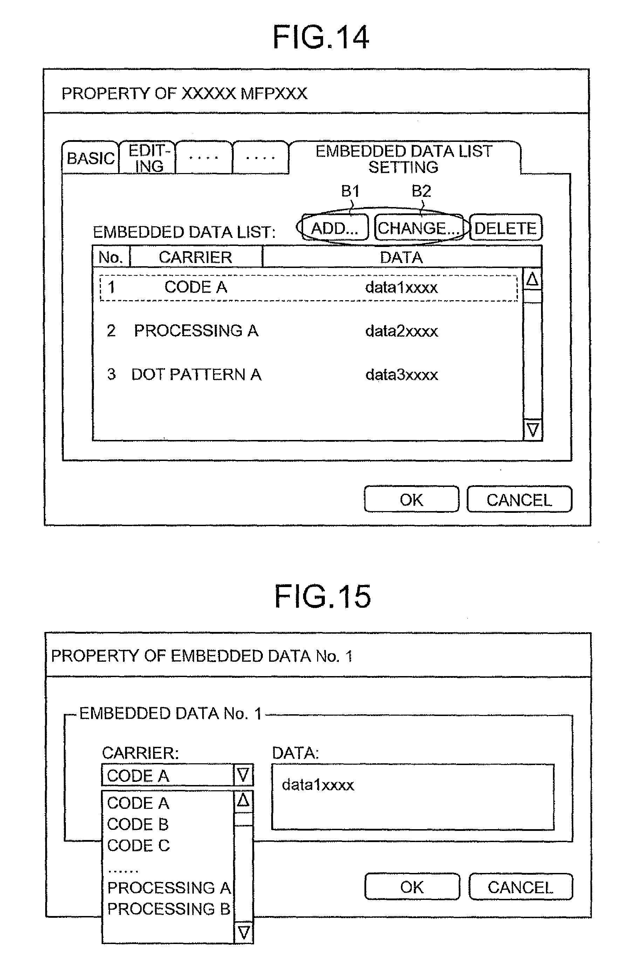

Fig. 13 is a flowchart of a procedure of print processing performed by receiving a print command from a printer driver of the personal computer PC1. The user operates the personal computer PC1 and designates encode object data. Fig. 14 is an example of a screen displayed on the display unit of the personal computer PC1 as a user interface for designating encode object data. Fig. 15 is an example of a screen displayed on the display unit when a button B1 or B2 displayed in the example of the screen shown in Fig. 14 is clicked by the user. The user selects encode object data and a type of a carrier for the data on the screen shown in Fig. 14 or 15. For example, codes A, B, and C (second type) indicate types of the symbol carrier, processing A and processing B (second type) indicate types of the content processing carrier, and a dot pattern A (second type) indicates a type of the woven pattern carrier. When encode object data and a type of a carrier for the data are selected by the user on the screen, the printer driver of the personal computer PC1 creates an embedded data list indicating a correspondence relation between the encode object data and the types of the carrier for the encode object data. A print object electronic document is designated and various print conditions such as a size of print object paper, a type of the paper, aggregation or allocation, and color printing or white and black printing are designated. The printer driver transmits information representing the electronic document, the print conditions, and the embedded data list to the multifunction peripheral MFP1 together with a print command. It is assumed that the embedded data list shown in Fig. 7 is transmitted. Further, for example, it is assumed that data corresponding to the code A is a file name of the print object electronic document, data corresponding to the code B is a file size of the print object electronic document, data corresponding to the processing A is a printing date and time, data corresponding to the processing B is the number of times of printing, data corresponding to the dot pattern A is an apparatus name of the multifunction peripheral MFP1 as a transmission destination of the print command, and data corresponding to the dot pattern B is an address given to the multifunction peripheral MFP1 as the transmission destination of the print command. It is assumed that the file name and the file size of the print object electronic document, the printing date and time and the number of times of printing, the apparatus name of the multifunction peripheral MFP1 as the transmission destination of the print command, and the address given to the multifunction peripheral MFP1 are acquired and included in the print conditions.

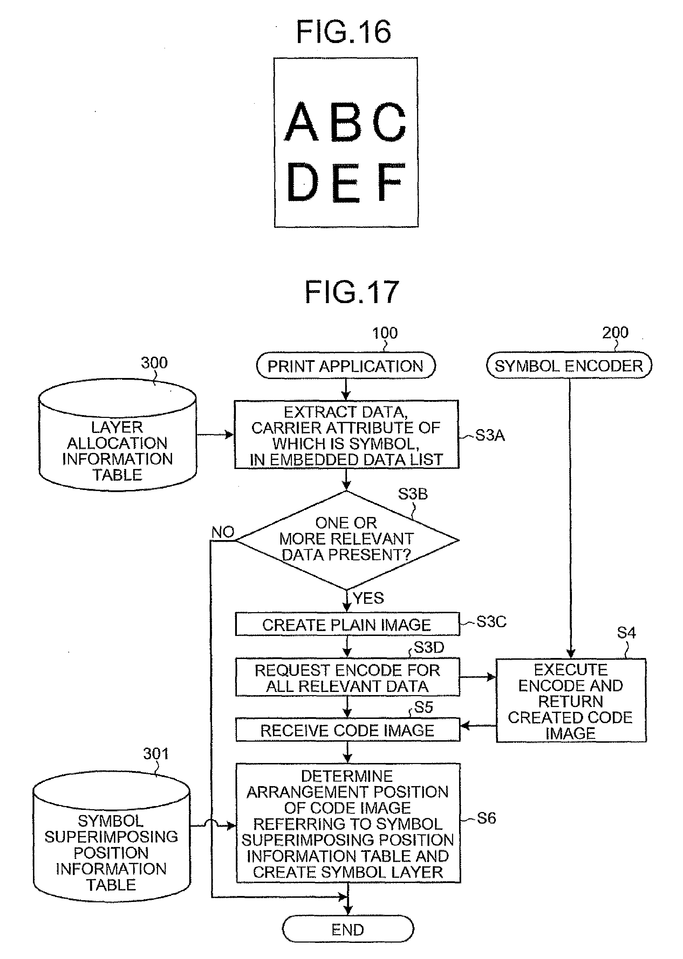

The print application 100 of the multifunction peripheral MFP1 receives, through the printer driver of the personal computer PC1, the information representing the print object electronic document, the print conditions, and the embedded data list together with the print command (Step S1). The print application 100 performs rendering using the information representing the print object electronic document and creates a rendering image for each page of the print object electronic document (Step S2). The print application 100 executes various types of image processing such as edge enhancement processing, thinning processing, thickening processing, and smoothing processing and creates a rendering image. Fig. 16 is a diagram of an example of the rendering image created by the print application 100.

Subsequently, the print application 100 applies code image creation request processing to the symbol encoder 200 (Step S3). The symbol encoder 200 encodes encode object data to create a code image and returns the code image to the print application 100 (Step S4). The print application 100 acquires the code image (Step S5) and creates a symbol layer using the code image (Step S6). The print application 100 does not apply the image processing at Step S2 to the code image and the symbol layer created by using the code image. The processing at Steps S3 to S6 is explained in detail. Fig. 17 is a flowchart of a detailed procedure of the processing at Steps S3 to S6. Steps S3A to S3D in the figure indicate details of the processing at Step S3. First, at Step S3A, the print application 100 extracts data, a "carrier attribute" of which is 'symbol', in the embedded data list acquired at Step S1 referring to the layer allocation information table 300. When relevant data is present ("YES" at Step S3B), the print application 100 creates a plain image having a size same as that of the rendering image created at Step S2 in Fig. 13 (Step S3C). It is preferable that, as a background color of the plain image, a color such as gray other than white and black used for representing a symbol is used. It is assumed that there are two data, "carrier attributes" of which are 'symbol', and the data indicate a file name and a file size of the print object electronic document, respectively. The print application 100 passes all the data extracted at Step S3A and creation parameters for the data to the symbol encoder 200 and requests the symbol encoder 200 to encode the data (Step S3D). It is assumed that the creation parameters passed to the symbol encoder 200 are decided in advance by the print application 100 and stored in, for example, a read only memory (ROM) 12a or a hard disk (HD) 18.

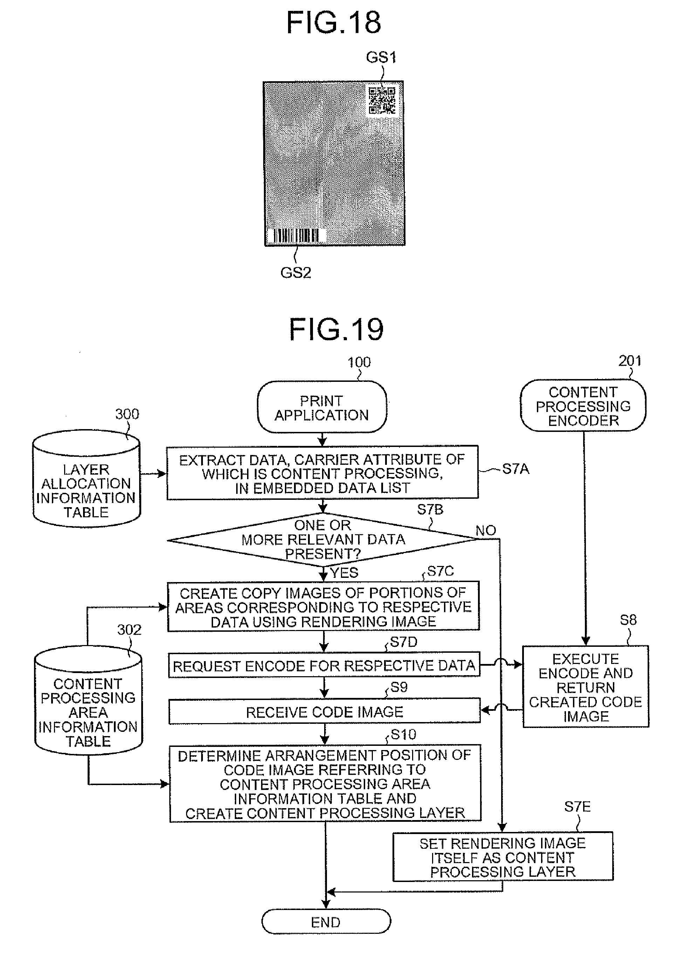

The symbol encoder 200 performs encode as explained above using the data and the creation parameters passed from the print application 100, creates code images corresponding to the respective data, and passes the created code images to the print application 100 (Step S4). The print application 100 receives the code images (two code images corresponding to the codes A and B, respectively) (Step S5). The print application 100 determines arrangement positions of the respective code images referring to the positional information of the symbol superimposing position information table 301, arranges the respective code images in the respective arrangement positions in the plain image created at Step S3C, and creates a symbol layer (Step S6). Specifically, because there are the two code images, in the symbol superimposing position information table 301 shown in Fig. 11, the print application 100 arranges the respective code images in the respective positions referring to "superimposing positions" included in the positional information, "symbol numbers" of which are '1' and '2'. It may be arbitrarily determined in which positions the respective code images should be arranged. Alternatively, the code images may be arranged in association with "symbol numbers" '1' and '2' in order of the codes A and B. Fig. 18 is a diagram of an example of the symbol layer created by the print application 100. In the figure, code images GS1 and GS2 encoded into the respective carriers of the codes A and B by the symbol encoder 200 appear. The print application 100 associates '1' with the symbol layer as a "layer number" referring to the "layer number" of the layer allocation information table 300 and causes a random access memory (RAM) 12b to temporarily store the symbol layer.

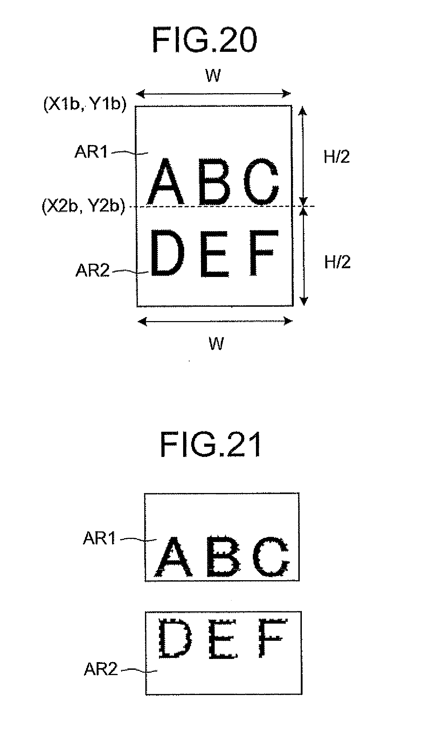

Referring back to Fig. 13, subsequently, the print application 100 applies code image creation request processing to the content processing encoder 201 (Step S7). The content processing encoder 201 encodes encode object data to create a code image and returns the code image to the print application 100 (Step S8). The print application 100 acquires the code image (Step S9) and creates a content processing layer using the code image (Step S10). The print application 100 does not apply the image processing at Step S2 to the code image and the content processing layer created by using the code image. The processing at Steps S7 to S10 is explained in detail. Fig. 19 is a flowchart of a detailed procedure of the processing at Steps S7 to S10. Steps S7A to S7E in the figure indicate details of the processing at Step S3. First, at Step S7A, the print application 100 extracts data, a "carrier attribute" of which is 'content processing', in the embedded data list acquired at Step S1. When relevant data is present ("YES" at Step S7B), the print application 100 creates, referring to the processing area information stored in the content processing area information table 302, rendering images (partial images) of portions corresponding to areas indicated by the processing area information equivalent to the number of the relevant data using the rendering image (see Fig. 16) created at Step S2 (Step S7C). It is assumed that a background color of the partial images is white. As shown in Fig. 8, there are two data, "carrier attributes" of which are 'content processing', corresponding to the respective processing A and processing B. The data, "carrier attributes" of which are 'content processing', are a printing date and time and the number of printing of a print object. At Step S7C, specifically, the print application 100 sets, referring to values of "start positions" and "width and height", "content numbers" of which are '1' and '2', of the processing area information stored in the content processing area information table 302, areas having the width and the height starting from the respective start positions as processing areas and creates portions of the rendering image corresponding to the processing areas as partial images. Fig. 20 is a diagram of an example of a rendering image divided into areas according to the processing area information. As shown in the figure, areas AR1 and AR2 obtained by equally dividing an area in the rendering image into two in the height direction are calculated based on data, "content processing numbers" of which are '1' and '2', of the processing area information. Partial images of the rendering image corresponding to the respective areas are created.

Subsequently, the print application 100 passes the rendering images created at Step S7C and all the data extracted at Step S7A and creation parameters for the data to the content processing encoder 201 and requests the content processing encoder 201 to perform encode of the data (Step S7D). It is assumed that the creation parameters passed to the content processing encoder 201 are decided in advance by the print application 100 and stored in, for example, the ROM 12a or the HD 18.

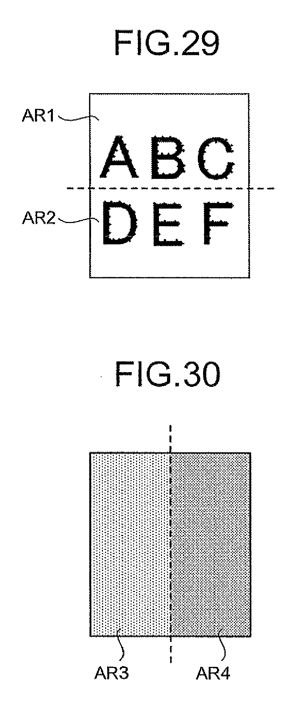

The content processing encoder 201 performs encode as explained above using the rendering images, the data, and the creation parameters passed from the print application 100, creates code images corresponding to the respective data, and passes the created code images to the print application 100 (Step S8). Fig. 21 is a diagram of an example of the code images created by the content processing encoder 201. As shown in Fig. 21, code images corresponding to the areas AR1 and AR2 shown in Fig. 20, respectively, are created. The print application 100 receives such code images (Step S9). The print application 100 determines arrangement positions of the respective code images referring to the processing area information of the content processing area information table 302, arranges the respective code images in the respective arrangement positions, and creates a content processing layer shown in Fig. 29 (Step S10). The print application 100 associates '2' with the content processing layer as a "layer number" referring to the "layer number" of the layer allocation information table 300 and causes the RAM 12b to temporarily store the content processing layer. When a result of the judgment at Step S7B is negative, the print application 100 sets the rendering image itself rendered at Step S2 as a content processing layer. The print application 100 associates '2' with the content processing layer and causes the RAM 12b to temporarily store the content processing layer.

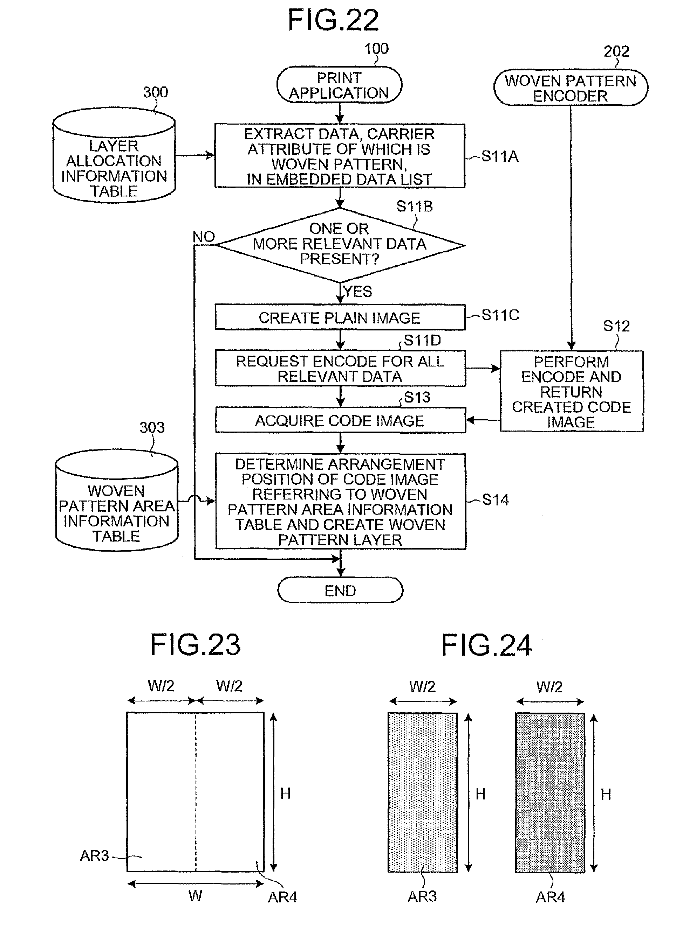

Referring back to Fig. 13, subsequently, the print application 100 applies code image creation request processing to the woven pattern encoder 202 (Step S11). The woven pattern encoder 202 encodes encode object data to create a code image and returns the code image to the print application 100 (Step S12). The print application 100 acquires the code image (Step S13) and creates a woven pattern layer using the code image (Step S14). The print application 100 does not apply the image processing at Step S2 to the code image and the woven pattern layer created by using the code image. The processing at Steps S11 to S14 is explained in detail. Fig. 22 is a flowchart of a detailed procedure of the processing at Steps S11 to S14. Steps S11A to S11D in the figure indicate details of the processing at Step S11. First, at Step S11A, the print application 100 extracts data, a "carrier attribute" of which is 'woven pattern', in the embedded data list acquired at Step S1 referring to the layer allocation information table 300. When relevant data is present ("YES" at Step S11B), the print application 100 creates a plain image having a size same as that of the rendering image created at Step S2 and without a pattern (Step S11C). It is assumed that a background color of the plain image is white. There are two data, "carrier attributes" of which are 'woven pattern', corresponding to the dot patterns A and B. It is assumed that the data are an apparatus name of the multifunction peripheral MFP1 that performs the printing and an address given to the multifunction peripheral MFP1.

The print application 100 sets, referring to the processing area information stored in the layer allocation information table 300 and referring to values of "start positions" and "width and height" of the processing area information equivalent to the number of the relevant data, areas having the width and the height starting from the start positions as processing areas and calculates sizes of the processing areas, i.e., sizes of code images to be created. Fig. 23 is a diagram of an example of the size of the processing areas. As shown in Fig. 23, areas AR3 and AR4 obtained by equally dividing an area in the rendering image into two in the width direction are calculated based on data, "woven pattern numbers" of which are '1' and '2', of the processing area information. Code images of sizes of the areas AR3 and AR4 are created. Subsequently, the print application 100 passes all the data extracted at Step S11A, the sizes of the code images, and creation parameters to the woven pattern encoder 202 and requests the woven pattern encoder 202 to encode the data (Step S11D). It is assumed that the creation parameters passed to the woven pattern encoder 202 are decided in advance by the print application 100 and stored in, for example, the ROM 12a or the HD 18.

The woven pattern encoder 202 performs encode as explained above using the data, the sizes of the processing areas, and the creation parameters passed from the print application 100, creates code images corresponding to the respective data, and passes the created code images to the print application 100 (Step S12). Fig. 24 is a diagram of an example of the code images created by the woven pattern encoder 202. As shown in Fig. 24, the code images corresponding to the areas AR3 and AR4 shown in Fig. 23, respectively, are created. The print application 100 receives such code images. The print application 100 determines arrangement positions of the respective code images referring to the woven pattern area information table 303, arranges the respective code images in the respective arrangement positions in the plain image created at Step S11, and creates a woven pattern layer shown in Fig. 30. The print application 100 associates '3' with the woven pattern layer as a "layer number" referring to the "layer number" of the layer allocation information table 300.

Referring back to Fig. 13, subsequently, the print application 100 creates a layer image information list (see Fig. 12) in which the created respective layers, values of the "layer numbers" associated with the respective layers, and "penetration colors" are associated with one another. The "penetration colors" indicate background colors used when the respective layers are created. In Fig. 12, a layer corresponding to the "layer number" '1' is the symbol layer, a layer corresponding to the "layer number" '2' is the content processing layer, and a layer corresponding to the "layer number" '3' is the woven pattern layer. The print application 100 passes the layer image information list to the image combining unit 203 and requests the image combining unit 203 to combine the images (Step S15).

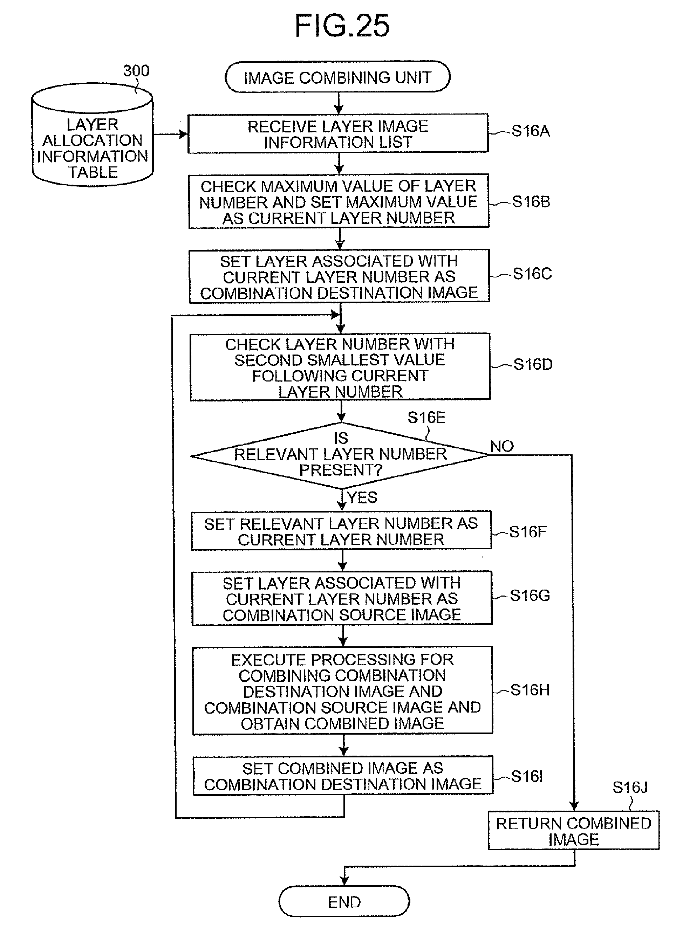

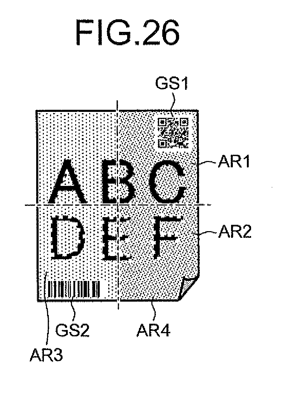

The image combining unit 203 executes processing for combining the images (Step S16). The processing at Step S16 is explained in detail. Fig. 25 is a flowchart of a detailed procedure of the processing at Step S16. The print application 100 receives the layer image information list (Step S16A). The print application 100 checks a maximum value of the "layer numbers" of the layer image information list, sets a "layer number" with the maximum value as a current layer number (Step S16B), and sets a layer associated with the current layer number as an image as a combination destination (hereinafter, "combination destination image") (Step S16C). Subsequently, the image combining unit 203 checks a "layer number" with a second smallest value following the current layer number in the layer image information list (Step S16D). When there is a relevant value ("YES" at Step S16E), the image combining unit 203 sets the "layer number" as a current number (Step S16F) and sets a layer associated with the current number as an image as a combination source (hereinafter, "combination source image") (Step S16G). The image combining unit 203 performs processing for combining the combination source image and the combination destination image (Step S16H). Specifically, when a color of a pixel of the combination source image corresponding to each pixel of the combination destination image is not a penetration color, the image combining unit 203 replaces a pixel value of the pixel of combination destination image with a pixel value of the pixel of the combination source image. In other words, when a color of a pixel of the combination source image is a penetration color, the image combining unit 203 uses a pixel value of the combination destination image corresponding to the pixel without replacing the pixel value of the combination destination image with a pixel value of the combination source image. Subsequently, the image combining unit 203 obtains, as a result of the combination processing, a combined image of the combination destination image and the combination source image, sets the combined image as a combination destination image (Step S16I), and performs the processing at Step S16D. When a "layer number" with a second smallest value following the current layer number is not present ("NO" at Step S16E), the image combining unit 203 passes a combined image finally obtained at Step S16I to the print application 100 (Step S16J). As a result, the layers are superimposed in order of the "layer numbers" '3', '2', and '1' in the layer image information list created at Step S15 and a combined image is created. Fig. 26 is a diagram of an example of the created combined image. In the image shown in Fig. 26, the symbol layer shown in Fig. 18, the content processing layer shown in Fig. 29, and the woven pattern layer shown in Fig. 30 are combined.

Referring back to Fig. 13, the print application 100 receives the combined image (Step S17). The print application 100 prints the image on paper according to the print conditions acquired at Step S1 (Step S18). As a result, the image shown in Fig. 26 is printed on paper. In Fig. 26, code images GS1 and GS2 in which a file name and a file size of a print object electronic document are encoded into symbol carriers, respectively, are printed. In the areas AR1 and AR2, code images in which a printing date and time and the number of times of printing are encoded into content processing carriers, respectively, are printed. In the areas AR3 and AR4, code images in which an apparatus name of the multifunction peripheral MFP1 and an address given to the multifunction peripheral MFP1 are encoded into woven pattern carriers, respectively, are printed.

Consequently, layers are created for the respective types the carriers and the respective layers are superimposed in predetermined order to create a print object image. As a result, even if the respective layers overlap, it is possible to accurately read respective code images. Therefore, it is possible to accurately decode the code images. Image processing affecting a reading quality such as edge enhancement processing, thinning processing, thickening processing, and smoothing processing is not applied to respective layer images. Therefore, it is possible to accurately decode the layer images.

When a power supply is turned on in the multifunction peripheral MFP1 and the scan application 101 starts, the scan application 101 causes the operation panel 20 to display items for setting print conditions and a scan button for instructing scanning. The user sets paper in a scanning unit (not shown) of the multifunction peripheral MFP1, sets print conditions on the operation panel 20, designates encode object data on the display screen shown in Figs. 14 and 15, and performs operation input for depressing the scan button. The scan application 101 receives the operation input and acquires information for designating the print conditions and the encode object data. The scan application 101 executes scanning of the paper set in the scanning unit. The scan application 101 creates an embedded data list same as the one described above using the information for designating the print conditions and the encode object data. The scan application 101 passes the created embedded data list, the print conditions, and a scan image obtained as a result of the scanning to the print application 100 together with a print command. Thereafter, the print application 100 performs the processing at Steps S1 to S18 shown in Fig. 13 in the same manner as described above.

The present invention is not limited to the embodiment explained above. Various modifications explained below as examples are possible.

The various programs executed by the multifunction peripheral MFP1 explained above may be stored in the HDD 18 instead of the ROM 12a. The various programs may be stored on a computer connected to a network such as the Internet and provided by being downloaded through the network. The various programs may be provided by being recorded in computer-readable recording media such as a compact disk-read only memory (CD-ROM), a flexible disk (FD), a compact disk-recordable (CD-R), and a digital versatile disk (DVD) as files of an installable format or an executable format.

In the functional structure of the multifunction peripheral MFP1 according to the embodiment, the multifunction peripheral MFP1 includes the symbol encoder 200, the content processing encoder 201, and the woven pattern encoder 202. However, types and the number of encoders are not limited to those described above.

In the embodiment, code images are created in order of a symbol code image, a content processing code image, and a woven pattern code image. However, order of creating code images is not limited to this order.

In the embodiment, one code image is created for one data. However, two or more data may be encoded into one carrier to create one code image.

In the code image creation request processing at Steps S3, S7, and S11, the print application 100 passes encode object data to the respective encoders 200 to 202 at a time and receives code images created by the respective encoders 200 to 202 at a time. However, the print application 100 may request the respective encoders 200 to 202 to create code image for each data and receive created code images.

Data encoded into respective carriers and the number of the data are not limited to those described above and are not limited to those included in print conditions by the printer driver.

In the embodiment, the symbol layer, the content layer, and the woven pattern layer are created. However, at least two or more of these layers only have to be created. In the layer image information list, information concerning the created layers only has to be included.

As symbol superimposing positions, content processing areas, and woven pattern areas in the embodiment, those arbitrarily designated by the user may be used.

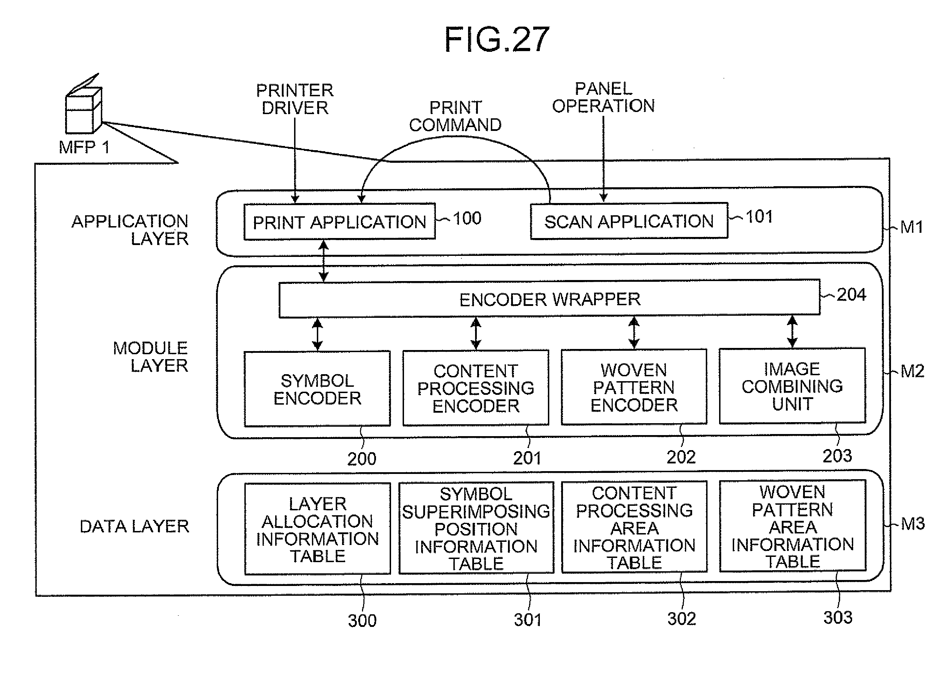

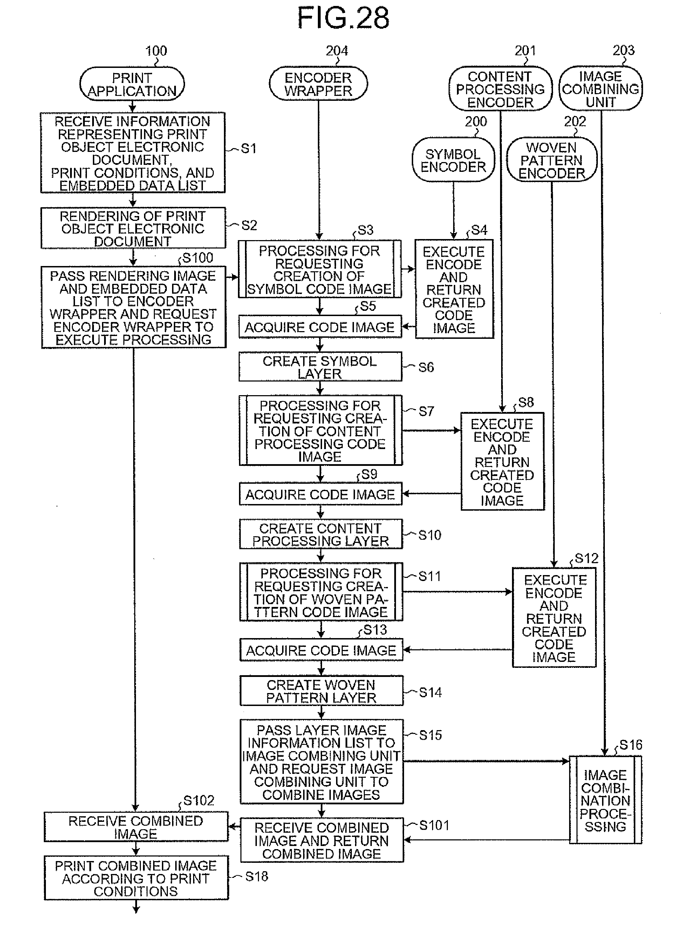

In the functional structure of the multifunction peripheral MFP1 according to the embodiment, an encoder wrapper may be further provided in the module layer M2. Fig. 27 is a block diagram of the functional structure of a multifunction peripheral MFP including an encoder wrapper. As shown in the figure, an encoder wrapper is provided between the print application 100 and the respective encoders 200 to 202 and the image combining unit 203. The encoder wrapper 204 is a function of requesting, in place of the print application 100, creation of the respective layers and creation of a combined image using the respective encoders 200 to 202 and the image combining unit 203. Fig. 28 is a flowchart of a procedure of operations according to a modification of the present invention. After performing the processing at Steps S1 to S2 in the same manner as the embodiment, the print application 100 passes the embedded information data list acquired at Step S1 and the rendering image created at Step S2 to the encoder wrapper 204 and requests the encoder wrapper 204 to create a combined image (Step S100). The encoder wrapper 204 receives the rendering image and the embedded data list and performs the processing at Step S3. Thereafter, the processing at Steps S4 to S16 is performed in the same manner as described above. At Step S16, the image combining unit 203 passes the created combined image to the encoder wrapper 204. The encoder wrapper 204 receives the combined image and passes the combined image to the print application 100 (Step S101). The print application 100 receives the combined image (Step S102) and performs printing in the same manner as Step S18.

When the encoder wrapper 204 is used as described above, the print application 100 does not need to perform control for creation of the layers and combination of the layers. Therefore, print processing for printing code images is facilitated.

In the embodiment, a total number of pages of an electronic document to be printed or the number of pieces of paper to be scanned is one. However, there may be a plurality of pages to be printed or a plurality of pieces of paper to be scanned. In such a case, the respective types of processing for creating a rendering image at Step S2, creating respective layers at Steps S3 to S14, and acquiring a combined image at Steps S15 to S17 only have to be performed the number of times equivalent to the number of pages to be printed or the number of pieces of paper to be scanned. Code images encoded with different types of information may be printed on all of a plurality of pieces of paper or code images encoded with the same information may be printed. Alternatively, code images may be printed on only paper to be printed first among a plurality of pieces of paper.

Encode object data and creation parameters for creating code images may be decided in advance or those arbitrarily set by the user may be used. In such a case, the print application 100 only has to acquire information set by the user in the personal computer PC1 or the multifunction peripheral MFP1 through the printer driver or the scan application 101. Consequently, the user can arbitrarily set information to be encoded. Therefore, it is possible to improve convenience for the user.

According to the present invention, print object information to be printed as an image and predetermined information to be encoded are acquired, the predetermined information is encoded to create a plurality of types of layer images including code images for each of the types, the types of layer images are superimposed according to a predetermined superimposition rule to create a combined image. Therefore, even if the respective layer images overlap, it is possible to accurately read the respective code images and accurately decode the code images.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image processing apparatus comprising:
a print-information acquiring unit that acquires print object information to be printed as an image and predetermined information to be encoded;
a code-image creating unit that encodes the predetermined information acquired by the print-information acquiring unit according to a predetermined encode rule to create a plurality of types of code images;
a layer-image creating unit that creates a plurality of types of layer images including the code images created by the code-image creating unit for each of the types;
a combined-image creating unit that superimposes the types of layer images created by the layer-image creating unit according to a predetermined superimposition rule to create a combined image; and
a printing unit that prints the combined image created by the combined-image creating unit on a recording medium.

2. The image processing apparatus according to claim 1, wherein
the print-information acquiring unit acquires type designation information for designating at least two or more of the types of the code images created by encoding the predetermined information, and
the code-image creating unit encodes the predetermined information for each of the types, which are designated by the type designation information acquired by the print-information acquiring unit, to create the code image.

3. The image processing apparatus according to claim 2, wherein
the code-image creating unit includes, for each of the types, a code-image-by-type creating unit that encodes the predetermined information to create the code images, and
the image processing apparatus further comprises a print control unit that classifies the predetermined information, which is acquired by the print-information acquiring unit, into each of the types designated by the type designation information, and requests the code-image-by-type creating unit corresponding to each of the types to encode the predetermined information and create the code images.

4. The image processing apparatus according to claim 3, wherein
the predetermined information includes pieces of encode object information by type different from one another as information to be encoded for each of the types, and
the print control unit classifies the respective pieces of encode object information by type included in the predetermined information into the respective types designated by the type designation information, and requests the code-image-by-type creating unit to encode the encode object information by type and create the code images.

5. The image processing apparatus according to claim 3, wherein
the code images classified into the types are further classified into a plurality of second types of code images,
the predetermined encode rule has an encode rule corresponding to the respective second types,
the type designation information is information for designating at least two or more of the second types as the types of the code images created by encoding the predetermined information,
the image processing apparatus further comprises a storing unit that stores therein correspondence relation information indicating a correspondence relation between the types of the code images and the second types and an order of the superimposition allocated to the types of the code images in advance,
the print control unit classifies, by referring to the correspondence information stored in the storing unit, the second types designated by the type designation information acquired by the print-information acquiring unit into the types of the code images, and requests the code-image-by-type creating unit corresponding to each of the types to encode the predetermined information and create the code images, and
the code-image-by-type creating unit encodes the predetermined information according to the encode rule corresponding to the second type to create the code images.

6. The image processing apparatus according to claim 2, further comprising:
a reading unit that acquires an image read by scanning a copy object medium with a scanning unit; and
an input receiving unit that receives a first operation input that designates the predetermined information of the encode object and a second operation input that designates at least two or more of the types of the code images created by encoding the predetermined information, wherein
the print-information acquiring unit acquires the image, which is read by the reading unit, as the print object information, and acquires the predetermined information and the type designation information based on the first operation input and the second operation input received by the input receiving unit.

7. The image processing apparatus according to claim 1, further comprising a storing unit that stores therein superimposition rule information indicating the predetermined superimposition rule, wherein
the combination-image creating unit determines order of superimposition of the layer images using the superimposition rule information stored in the storing unit.

8. The image processing apparatus according to claim 1, further comprising a storing unit that stores therein positional information indicating at least one of arrangement positions and arrangement areas of the code images, wherein
the layer-image creating unit creates the layer images, in which the code images created by the code-image creating unit are arranged, for each of the types using the positional information stored in the storing unit.

9. The image processing apparatus according to claim 8, wherein the layer-image creating unit calculates, when the code-image creating unit creates a plurality of code images of an identical type, arrangement positions of the code images using the positional information stored in the storing unit in creation of the layer images of the type, and creates the layer images in which the respective code images are arranged in respective calculated positions.

10. An image processing method comprising:
print-information acquiring including acquiring print object information to be printed as an image and predetermined information to be encoded;
code-image creating including encoding the predetermined information acquired at the print-information acquiring according to a predetermined encode rule to create a plurality of types of code images;
layer-image creating including creating a plurality of types of layer images including the code images created at the code-image creating for each of the types;
combined-image creating including superimposing the types of layer images created at the layer-image creating according to a predetermined superimposition rule to create a combined image; and
printing the combined image created at the combined-image creating on a recording medium.

11. The image processing method according to claim 10, wherein
the print-information acquiring includes-acquiring type designation information for designating at least two or more of the types of the code images created by encoding the predetermined information, and
the code-image creating includes encoding the predetermined information for each of the types, which are designated by the type designation information acquired at the print-information acquiring, to create the code image.

12. The image processing method according to claim 11, wherein
the code-image creating includes, for each of the types, code-image-by-type creating including encoding the predetermined information to create the code images, and
the image processing method further comprises print controlling including
classifying the predetermined information, which is acquired at the print-information acquiring, into each of the types designated by the type designation information, and
requesting the code-image-by-type creating corresponding to each of the types to encode the predetermined information and create the code images.

13. The image processing method according to claim 12, wherein
the predetermined information includes pieces of encode object information by type different from one another as information to be encoded for each of the types, and
the print controlling includes
classifying the respective pieces of encode object information by type included in the predetermined information into the respective types designated by the type designation information, and
requesting the code-image-by-type creating to encode the encode object information by type and create the code images.

14. The image processing method according to claim 12, wherein
the code images classified into the types are further classified into a plurality of second types of code images,
the predetermined encode rule has an encode rule corresponding to the respective second types,
the type designation information is information for designating at least two or more of the second types as the types of the code images created by encoding the predetermined information,
the image processing method further comprises storing correspondence relation information indicating a correspondence relation between the types of the code images and the second types and an order of the superimposition allocated to the types of the code images in advance,
the print controlling includes
classifying, by referring to the correspondence information stored at the storing, the second types designated by the type designation information acquired at the print-information acquiring into the types of the code images, and
requesting the code-image-by-type creating corresponding to each of the types to encode the predetermined information and create the code images, and
the code-image-by-type creating includes encoding the predetermined information according to the encode rule corresponding to the second type to create the code images.

15. The image processing method according to claim 11, further comprising:
image reading including acquiring an image read by scanning a copy object medium with a scanning unit; and
receiving a first operation input that designates the predetermined information of the encode object and a second operation input that designates at least two or more of the types of the code images created by encoding the predetermined information, wherein
the print-information acquiring includes
acquiring the image, which is read at the image reading, as the print object information, and
acquiring the predetermined information and the type designation information based on the first operation input and the second operation input received at the receiving.

16. The image processing method according to claim 10, further comprising storing superimposition rule information indicating the predetermined superimposition rule, wherein
the combination-image creating includes determining order of superimposition of the layer images using the superimposition rule information stored at the storing.

17. The image processing method according to claim 10, further comprising storing positional information indicating at least one of arrangement positions and arrangement areas of the code images, wherein
the layer-image creating includes creating the layer images, in which the code images created at the code-image creating are arranged, for each of the types using the positional information stored at the storing.

18. The image processing method according to claim 17, wherein the layer-image creating includes
calculating, when a plurality of code images of an identical type is created at the code-image creating, arrangement positions of the code images using the positional information stored at the storing in creation of the layer images of the type, and
creating the layer images in which the respective code images are arranged in respective calculated positions.

19. A computer program product comprising a computer-usable medium having computer-readable program codes embodied in the medium that when executed cause a computer to execute:
print-information acquiring including acquiring print object information to be printed as an image and predetermined information to be encoded;
code-image creating including encoding the predetermined information acquired at the print-information acquiring according to a predetermined encode rule to create a plurality of types of code images;
layer-image creating including creating a plurality of types of layer images including the code images created at the code-image creating for each of the types;
combined-image creating including superimposing the types of layer images created at the layer-image creating according to a predetermined superimposition rule to create a combined image; and
printing the combined image created at the combined-image creating on a recording medium.
